# EUROPÄISCHE PATENTSCHRIFT

(11) **EP 3 272 261 B1**
(45) Veröffentlichungstag und Bekanntmachung des Hinweises auf die Patenterteilung: **13.11.2019**
(21) Anmeldenummer: 17177993.7
(22) Anmeldetag: 27.06.2017
(51) Int. Cl.: A47L 7/00, A47L 5/22, A47L 9/28, H01M 2/10, B25F 5/00, H02J 7/00

(54) **TRAGBARES REINIGUNGSGERÄT MIT AKKUPACK**
PORTABLE CLEANING DEVICE WITH BATTERY PACK
DISPOSITIF PORTATIF AVEC BLOC D'ACCUMULATEURS

(30) Priorität: 29.06.2016 DE 102016111876
(43) Veröffentlichungstag der Anmeldung: 24.01.2018
(73) Patentinhaber: Metabowerke GmbH, 72622 Nürtingen (DE)
(72) Erfinder: Garbrecht, Horst, 75395 Ostelsheim (DE)
(74) Vertreter: Markfort, Iris-Anne Lucie

(56) Entgegenhaltungen:
- EP-A1- 1 477 272
- WO-A2-2014/006905
- DE-A1- 4 139 847
- DE-A1-102008 040 061
- DE-A1-102012 003 073
- DE-T5-112014 002 616
- US-A1- 2005 082 920
- US-A1- 2011 239 398

## Beschreibung

Die Erfindung betrifft eine tragbare Vorrichtung mit wenigstens einem Akkupack und einem Reinigungsgerät. Die Erfindung betrifft außerdem ein System, aufweisend eine tragbare Vorrichtung sowie wenigstens eine Elektrowerkzeugmaschine.

Grundsätzlich ist eine solche tragbare Vorrichtung für alle erdenklichen Reinigungsarbeiten einsetzbar und damit insbesondere zur Verwendung auf einer Baustelle und in Kombination mit einer Elektrowerkzeugmaschine geeignet.

Als Reinigungsgeräte werden vorliegend unter anderem Absauganlagen, Filteranlagen und Gebläse verstanden.

Als Elektrowerkzeugmaschine werden sowohl Geräte verstanden, die in kabelgebundener Weise vom Stromnetz oder kabellos von einem oder mehreren Akkupacks bzw. Batteriepacks mit Energie versorgt werden.

Mit einem Akkupack ist sowohl ein Akkumulator mit einer einzelnen Akkumulatorzelle (auch Sekundärzelle genannt), ein zusammengeschaltetes Paket mit mehreren Ackumulatorzellen oder eine Batterie, also eine oder mehrere Primärzellen, gemeint. Mit einem Akkupack kann auch ein Speicher für elektrische Energie gemeint sein, der nicht oder nicht ausschließlich elektrochemisch aufgebaut ist, also z. B. ein Kondensator.

Auf Baustellen und in beengten Räumen, beispielsweise in Flugzeugen und Eisenbahnen, ist es von Vorteil, mobile und insbesondere tragbare Reinigungsgeräte einzusetzen. Beispielsweise kann beim Einsatz von staub- oder partikelerzeugenden Elektrowerkzeugmaschinen, wie Bohrmaschinen, Elektrosägen oder Schleifmaschinen, eine tragbare Saugvorrichtung vorgesehen sein, die dafür sorgt, dass auftretender Staub bzw. Partikel möglichst vermieden bzw. abgesaugt werden.

Tragbare, netzbetriebene Absaugvorrichtungen sind in der Praxis hinlänglich bekannt. Es ist dabei von Vorteil, dass der Benutzer die Absaugvorrichtung ohne größeren Aufwand stets mit sich führen kann.

In der Praxis ist die tatsächliche Mobilität bei Verwendung einer solchen tragbaren Vorrichtung allerdings durch das mitzuführende Netzkabel eingeschränkt. Außerdem wird die notwendige Sorgfalt bei der Mitführung des Netzkabels, insbesondere bei Handhabung des Reinigungsgeräts in beengten Räumen oder gefährlichen Bereichen, wie Baustellen, oft außer Acht gelassen. Hierdurch kann es zu einem erhöhten Risiko der Beschädigung von Gegenständen und Verletzung von Personen kommen.

Unabhängig hiervon ist auch die Handhabung einer Elektrowerkzeugmaschine oft unkomfortabel. Bei einer netzbasierten Elektrowerkzeugmaschine gelten aufgrund des mitzuführenden Netzkabels dieselben Schwierigkeiten, die zuvor bereits beschrieben wurden. Bei einer kabellos betriebenen Elektrowerkzeugmaschine ist die Bedienung durch das erhöhte Gewicht, das im Wesentlichen auf das oder die Akkupacks zurückgeht, meist anstrengend und kräftezehrend, was insbesondere ein filigranes Arbeiten oder ein Arbeiten über einen längeren Zeitraum erschwert.

In der gattungsgemäßen EP 1 477 272 A1 wird eine tragbare Absauganlage für eine Elektrohandwerkzeugmaschine vorgeschlagen. Die Absauganlage wird über ein Ackupack elektrisch versorgt und derart mit der Elektrohandwerkzeugmaschine verbunden, dass das Akkupack der Absauganlage auch die Elektrowerkzeugmaschine elektrisch zu versorgen vermag.

In Anbetracht des bekannten Stands der Technik besteht eine Aufgabe der vorliegenden Erfindung darin, eine tragbare Vorrichtung bereitzustellen, die eine im Vergleich mit dem Stand der Technik erhöhte Mobilität und einen erhöhten Komfort bei der Bedienung ermöglicht.

In Anbetracht des bekannten Stands der Technik besteht eine Aufgabe der Erfindung außerdem darin, ein System aus einer tragbarer Vorrichtung und einer Elektrowerkzeugmaschine bereitzustellen, das eine erhöhte Mobilität und einen erhöhten Komfort ermöglicht.

Demgemäß wird eine tragbare Vorrichtung mit den Merkmalen des Anspruchs 1 und ein System mit den Merkmalen des Anspruchs 8 vorgeschlagen.

Bei der erfindungsgemäßen Lösung ist vorgesehen, dass wenigstens ein Akkupack zur elektrischen Versorgung des Reinigungsgeräts eingerichtet ist. Die tragbare Vorrichtung umfasst ferner wenigstens eine erste Schnittstelle zur elektrischen und mechanischen Aufnahme und Verbindung des wenigstens einen Akkupacks sowie eine Steuereinheit und eine Benutzerschnittstelle.

Besonders vorteilhaft an der erfindungsgemäßen Lösung ist, dass durch die Verwendung wenigstens eines Akkupacks zur elektrischen Versorgung des Reinigungsgeräts im besten Fall kein Netzkabel mehr mitgeführt werden muss. Der Benutzer des Reinigungsgeräts kann sich somit ohne Beeinträchtigung frei bewegen.

Dadurch, dass wenigstens eine erste Schnittstelle zur Aufnahme des wenigstens einen Akkupacks vorgesehen ist, können Akkupacks von dem Benutzer beliebig mit der tragbaren Vorrichtung verbunden oder von der tragbaren Vorrichtung getrennt werden. Die Akkupacks können flexibel ausgetauscht werden und sind kein fester Bestandteil der tragbaren Vorrichtung.

Die tragbare Vorrichtung kann ferner wenigstens ein Gehäuse, wenigstens ein Saugrohr und/oder Blasrohr und/oder eine Bürste umfassen, welches bzw. welche an dem Gehäuse angeordnet ist bzw. sind. Die tragbare Vorrichtung kann ferner wenigstens eine Antriebseinheit umfassen. Des Weiteren kann die tragbare Vorrichtung wenigstens ein Behältnis zum Auffangen von Staub und Schmutz und/oder wenigstens ein Reservoir für Reinigungsmittel, Flüssigkeiten, Gase, und so weiter, enthalten.

Es kann vorgesehen sein, dass die Benutzerschnittstelle eine Anzeigevorrichtung aufweist, um einen Betriebszustand der tragbaren Vorrichtung anzuzeigen. Es kann beispielsweise vorgesehen sein, dass die Anzeigevorrichtung einen Ladezustand des wenigstens einen Akkupacks, einen Füllzustand des Behältnisses und/oder einen Füllzustand des Reservoirs anzeigt.

Erfindungsgemäß ist eine zweite Schnittstelle vorgesehen, über die wenigstens eine Elektrowerkzeugmaschine durch das wenigstens eine Akkupack elektrisch versorgbar ist und/oder durch die Benutzerschnittstelle bedienbar ist und/oder mit der Steuereinheit zum Austausch von Daten verbunden ist.

Bei der Elektrowerkzeugmaschine kann es sich insbesondere um eine Elektrohandwerkzeugmaschine handeln.

Dadurch, dass die Elektrowerkzeugmaschine durch das wenigstens eine Akkupack der tragbaren Vorrichtung elektrisch versorgbar ist, kann zum einen das Gewicht der Elektrowerkzeugmaschine reduziert sein, da die Elektrowerkzeugmaschine im besten Fall selbst kein Akkupack mehr aufweisen muss. Hierdurch kann die Handhabung der Elektrowerkzeugmaschine erleichtert werden. Weiterhin kann es vorteilhaft sein, die elektrische Versorgung ausgehend von einer zentralen Stelle, also vorliegend der tragbaren Vorrichtung, vorzunehmen. Überwachung, Wartung und Austausch der Akkupacks können somit einfacher möglich sein.

Es kann außerdem von Vorteil sein, durch eine zentrale Benutzerschnittstelle an der tragbaren Vorrichtung gleichzeitig die tragbare Vorrichtung bzw. das Reinigungsgerät und die Elektrowerkzeugmaschine zu steuern, wodurch der Benutzerkomfort erhöht sein kann.

Dadurch, dass die tragbare Vorrichtung und die Elektrowerkzeugmaschine für einen gemeinsamen Betrieb vorgesehen sein können, kann ein Austausch von Daten, insbesondere zwischen deren Steuereinheiten, von Vorteil sein, wodurch sich beispielsweise das Reinigungsgerät und die Elektrowerkzeugmaschine automatisch optimal aufeinander abstimmen können. Beispielsweise kann eine Reinigungsleistung von einer Betriebsleistung der Elektrowerkzeugmaschine abhängig sein.

Es kann vorgesehen sein, dass die zweite Schnittstelle einen Gleichspannungswandler und/oder Wechselrichter umfasst, wodurch die tragbare Vorrichtung noch universeller einsetzbar ist. Beispielsweise kann ein 230V-Wechselrichter vorgesehen sein, wodurch auch netzbasierte Elektrowerkzeugmaschinen durch das wenigstens eine Akkupack der tragbaren Vorrichtung versorgbar sind.

Es kann auch vorgesehen sein, dass anstelle einer Elektrowerkzeugmaschine ein beliebiges anderes Gerät mit der zweiten Schnittstelle verbunden wird und vorzugsweise gemeinsam mit der tragbaren Vorrichtung verwendbar ist.

Es kann ferner vorgesehen sein, dass die tragbare Vorrichtung noch weitere Schnittstellen in der Art der zweiten Schnittstelle umfasst, über die weitere Elektrowerkzeugmaschinen oder Geräte mit der tragbaren Vorrichtung verbindbar sind.

In einer Weiterbildung der Erfindung kann vorgesehen sein, dass die Steuereinheit dazu eingerichtet ist, das Reinigungsgerät automatisch zu aktivieren, wenn die wenigstens eine Elektrowerkzeugmaschine elektrische Leistung aus dem wenigstens einen Akkupack bezieht, und automatisch zu deaktivieren, wenn die wenigstens eine Elektrowerkzeugmaschine keine elektrische Leistung aus dem wenigstens einen Ackupack bezieht.

Insbesondere wenn die Elektrowerkzeugmaschine durch das wenigstens eine Akkupack der tragbaren Vorrichtung versorgt wird, kann eine Start-/Stopp-Automatik technisch vorteilhaft durch eine Überwachung der abgenommenen elektrischen Leistung realisiert werden. Der Benutzer der tragbaren Vorrichtung kann somit beispielsweise durch Inbetriebnahme der Elektrowerkzeugmaschine automatisch ein Zuschalten des Reinigungsgeräts auslösen. Hierdurch können zusätzlich notwendige Arbeitsgänge reduziert werden und der Benutzer kann sich vollumfänglich auf seine Arbeit mit der Elektrowerkzeugmaschine konzentrieren.

In einer Weiterbildung der Erfindung kann eine Messeinrichtung vorgesehen sein, die dazu eingerichtet ist, über einen Stromfluss und/oder über einen Leistungsverbrauch und/oder über Spannungsschwankungen zu detektieren, ob die wenigstens eine Elektrowerkzeugmaschine elektrische Leistung aus dem wenigstens einen Akkupack bezieht.

Derartige Messeinrichtungen haben sich als geeignet zur Realisierung der Start-/Stopp-Automatik herausgestellt. Durch die Strommessung oder Leistungsmessung kann erfasst werden, ob die Elektrowerkzeugmaschine elektrische Energie von dem wenigstens einen Akkupack bezieht, was auf einen Betrieb der Elektrowerkzeugmaschine hindeutet. Alternativ oder zusätzlich kann auch vorgesehen sein, elektrische Spannungsschwankungen des wenigstens einen Akkupacks zu überwachen, wodurch insbesondere auf einen Wechsel eines Betriebszustands der Elektrowerkzeugmaschine geschlossen werden kann.

In einer Weiterbildung der Erfindung kann vorgesehen sein, dass die Steuereinheit eingerichtet ist, das Reinigungsgerät automatisch zu aktivieren, wenn die wenigstens eine Elektrowerkzeugmaschine über die zweite Schnittstelle ein Aktivierungssignal überträgt, und automatisch zu deaktivieren, wenn die wenigstens eine Elektrowerkzeugmaschine über die zweite Schnittstelle ein Deaktivierungssignal überträgt.

Es kann also beispielsweise vorgesehen sein, dass eine Intelligenz bzw. ein Controller der Elektrowerkzeugmaschine abhängig von einem Betriebszustand selbstständig der tragbaren Vorrichtung signalisiert, das Reinigungsgerät zuzuschalten. Alternativ oder zusätzlich kann auch vorgesehen sein, dass die Steuereinheit der tragbaren Vorrichtung eingerichtet ist, über die zweite Schnittstelle ein Aktivierungssignal zu übertragen, um die Elektrowerkzeugmaschine zu aktivieren und über die zweite Schnittstelle ein Deaktivierungssignal zu übertragen, um die Elektrowerkzeugmaschine zu deaktivieren. Es kann also auch vorgesehen sein, dass bei Inbetriebnahme des Reinigungsgeräts automatisch die Elektrowerkzeugmaschine zugeschaltet wird.

Es kann vorgesehen sein, dass ein Aktivierungssignal und/oder ein Deaktivierungssignal bei einem Wechsel zwischen Betriebszuständen einmalig übermittelt wird. Es kann aber auch vorgesehen sein, dass ein Aktivierungssignal und/oder ein Deaktivierungssignal mehrfach, z. B. periodisch, oder dauerhaft übermittelt wird.

Es kann vorgesehen sein, dass die Benutzerschnittstelle der tragbaren Vorrichtung an dem Saugrohr oder Blasrohr oder der Bürste der tragbaren Vorrichtung angeordnet ist. Eine derartige Positionierung der Benutzerschnittstelle kann von Vorteil sein, da der Benutzer üblicherweise mit dem Saugrohr oder Blasrohr oder der Bürste hantiert, wodurch ein einhändiger Betrieb ermöglicht wird. Dieses Konzept lässt sich insbesondere vorteilhaft mit der automatischen Aktivierung bzw. Deaktivierung der Elektrowerkzeugmaschine bei Inbetriebnahme des Reinigungsgeräts kombinieren. Beispielsweise kann somit eine Tischkreissäge oder dergleichen in Betrieb oder außer Betrieb genommen werden.

Erfindungsgemäß sind wenigstens zwei erste Schnittstellen zur Aufnahme von jeweils einem Akkupack vorgesehen, die dazu ausgebildet sind, die Akkupacks elektrisch seriell und/oder elektrisch parallel zu verschalten.

Es kann vorgesehen sein, dass die Steuereinheit die Akkupacks nach Bedarf oder auf Basis einer Eingabe an die Benutzerschnittstelle zusammenschaltet. Eine parallele Verschaltung von Akkupacks kann von Vorteil sein, um die Betriebsdauer des Reinigungsgeräts und/oder der Elektrowerkzeugmaschine zu erhöhen. Eine serielle Verschaltung von Akkupacks kann von Vorteil sein, um die in dem Reinigungsgerät und/oder der Elektrowerkzeugmaschine umgesetzte Leistung und somit beispielsweise eine umgesetzte mechanische Kraft oder einen Durchsatz eines Reinigungsvorgangs zu erhöhen.

In einer Weiterbildung kann ferner vorgesehen sein, dass das Reinigungsgerät dazu eingerichtet ist, wahlweise von einem oder mehreren der Akkupacks, die mit der wenigstens einen ersten Schnittstelle verbunden sind, elektrisch versorgt zu werden.

Das Reinigungsgerät kann wahlweise mit einem oder mehreren Akkupacks betrieben werden, um so die Nutzungsdauer variabel zu halten.

Es kann vorgesehen sein, dass die Steuereinheit selbständig oder auf Basis einer Eingabe an die Benutzerschnittstelle eine bestimmte Anzahl Akkupacks zum Betrieb des Reinigungsgeräts bestimmt. Es kann somit beispielsweise vorgesehen sein, angeschlossene Akkupacks einzeln der Reihe nach zu entleeren. Es kann auch vorgesehen sein, dass ein Teil der Akkupacks zur elektrischen Versorgung der Elektrowerkzeugmaschine und ein Teil der Akkupacks zur elektrischen Versorgung des Reinigungsgeräts bestimmt sind.

In einer Weiterbildung der Erfindung kann außerdem vorgesehen sein, dass die erste Schnittstelle korrespondierend zu einer Schnittstelle der Elektrowerkzeugmaschine zur Aufnahme und Verbindung eines Akkupacks ausgebildet ist.

Vorzugsweise kommen dieselben Akkupacktypen zum Einsatz, die auch die Elektrowerkzeugmaschine mit Energie versorgen. Dadurch, dass die Schnittstellen korrespondierend ausgebildet sind, können Akkupacks komfortabel zwischen der Elektrowerkzeugmaschine und der tragbaren Vorrichtung ausgetauscht werden. Gleichwohl kann es von Vorteil sein, dass ein gemeinsames Ladegerät zum Aufladen von Akkupacks der Elektrowerkzeugmaschine und Akkupacks der tragbaren Vorrichtung verwendbar ist.

Es kann vorgesehen sein, dass das wenigstens eine Akkupack der tragbaren Vorrichtung über die zweite Schnittstelle elektrisch seriell und/oder elektrisch parallel mit wenigstens einem Akkupack der Elektrowerkzeugmaschine verschaltbar ist.

Insbesondere wenn die Elektrowerkzeugmaschine und die tragbare Vorrichtung beide jeweils eines oder mehrere Akkupacks aufweisen, kann es von Vorteil sein, wenn eine Steuereinheit, beispielsweise die Steuereinheit der tragbaren Vorrichtung, alle Akkupacks gemeinsam verwaltet bzw. bedarfsgerecht elektrisch zusammenschaltet.

In einer Weiterbildung der Erfindung kann eine Überwachungseinrichtung vorgesehen sein, um wenigstens einen Betriebsparameter des Reinigungsgeräts zu überwachen und an die Steuereinheit ein entsprechendes Signal weiterzugeben, wobei die Steuereinheit dazu eingerichtet ist, einen Benutzer über den wenigstens einen Betriebsparameter zu informieren und/oder die Leistung des Reinigungsgeräts in Abhängigkeit des wenigstens einen Betriebsparameters zu regeln und/oder die Leistung der wenigstens einen Elektrowerkzeugmaschine in Abhängigkeit des wenigstens einen Betriebsparameters zu regeln.

In einer Weiterbildung kann insbesondere vorgesehen sein, dass das Reinigungsgerät ein Absauggerät ist, und als Betriebsparameter ein Füllstand des Absauggeräts und/oder eine Saugleistung des Absauggeräts und/oder ein Partikel-zu-Luft-Verhältnis eines Absaugstroms vorgesehen ist bzw. sind.

Somit kann beispielsweise eine Steuerung oder Regelung der Elektrowerkzeugmaschine von Seiten der tragbaren Vorrichtung auf Basis dieser Betriebsparameter erfolgen. Beispielsweise kann im Falle einer reduzierten Saugleistung die Elektrowerkzeugmaschine ebenfalls in ihrer Leistung gedrosselt werden. Es kann auch vorgesehen sein, dass die Elektrowerkzeugmaschine automatisch abgeschaltet wird, wenn ein Betrieb des Reinigungsgeräts nicht mehr möglich ist, beispielsweise bei Erreichen eines kritischen Füllstands des Absauggeräts. Gleichwohl kann eine Überwachung des Absaugstroms von Vorteil sein, um beispielsweise einen Partikelstrom, der von dem Reinigungsgerät nicht mehr verarbeitet werden kann, zu detektieren und die Elektrowerkzeugmaschine gegebenenfalls in ihrer Leistung und somit in ihrem Durchsatz zu beschränken.

Es kann alternativ oder zusätzlich vorgesehen sein, dass das Reinigungsgerät von der Elektrowerkzeugmaschine geregelt wird.

Es kann vorgesehen sein, dass die Elektrowerkzeugmaschine eine Schleifmaschine, vorzugsweise ein Langhalsschleifer, ist.

Beispielsweise kann die tragbare Vorrichtung in diesem Fall bei Schleifarbeiten im Trockenbau, speziell in Treppenhäusern oder sonstigen beengten Räumlichkeiten, vorteilhaft eingesetzt werden. Das Reinigungsgerät kann somit vorzugsweise zum Absaugen von Schleifstäuben in Verbindung mit der Schleifmaschine, die vorzugsweise ebenfalls kabellos betrieben wird, verwendet werden. Insbesondere bei Arbeiten mit Langhalsschleifern fällt bekanntermaßen sehr viel Schleifstaub an.

Die Erfindung betrifft auch ein System mit den Merkmalen des Anspruchs 8. Das System weist eine tragbare Vorrichtung sowie wenigstens eine Elektrowerkzeugmaschine auf.

In einer Weiterbildung kann vorgesehen sein, dass die Elektrowerkzeugmaschine des Systems von wenigstens einem Akkupack der tragbaren Vorrichtung elektrisch versorgbar ist und über eine zweite Schnittstelle mit einer Steuereinheit der tragbaren Vorrichtung verbunden ist, um ein Aktivierungssignal oder ein Deaktivierungssignal zu übertragen, wodurch ein Reinigungsgerät der tragbaren Vorrichtung aktivierbar oder deaktivierbar ist.

Selbstverständlich können Merkmale, die im Zusammenhang mit der tragbaren Vorrichtung bereits beschrieben wurden, gleichfalls in vorteilhafter Weise für das System eingesetzt werden.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind.

Merkmale eines Ausführungsbeispiels sind auch losgelöst von den anderen Merkmalen des gleichen Ausführungsbeispiels umsetzbar und können dementsprechend von einem Fachmann zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine räumliche Darstellung der tragbaren Vorrichtung in einer ersten Ausführung;
- Figur 2: eine Seitenansicht einer tragbaren Vorrichtung in einer zweiten Ausführung;
- Figur 3: ein System mit einer tragbaren Vorrichtung in einer dritten Ausführung und einer Elektrowerkzeugmaschine; und
- Figur 4: ein Schaltungsdiagramm des Systems aus Figur 3.

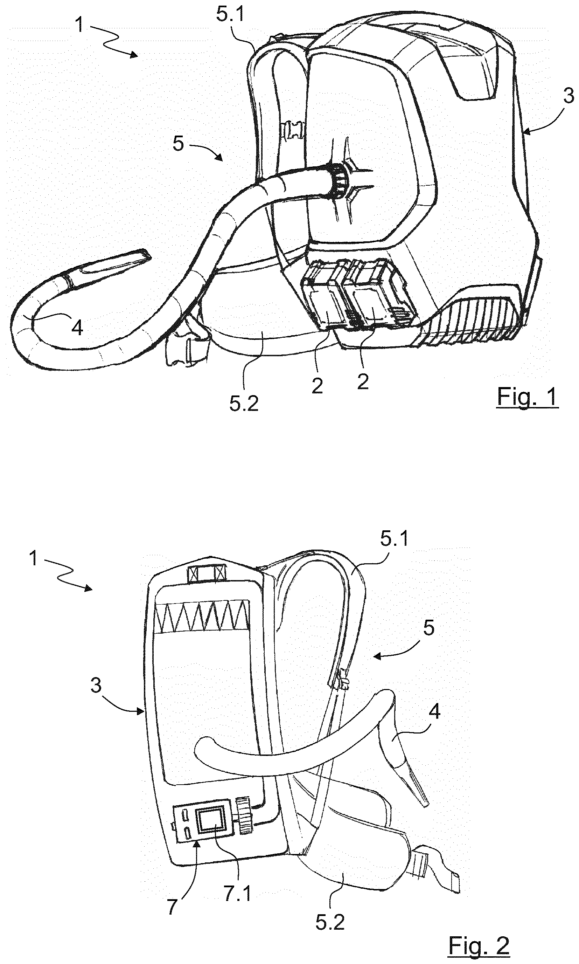

In Figur 1 ist eine tragbare Vorrichtung 1 mit zwei Akkupacks 2 dargestellt. Die tragbare Vorrichtung 1 umfasst ein Reinigungsgerät 3 in einer Ausbildung als Absauggerät 3 mit einem Absaugschlauch 4, der an dem Gehäuse des Absauggeräts 3 angebracht ist. Die tragbare Vorrichtung 1 umfasst ferner ein Tragesystem 5 bestehend aus Schultergurten 5.1 und Hüftgurten 5.2, wie dies von Rucksäcken hinlänglich bekannt ist.

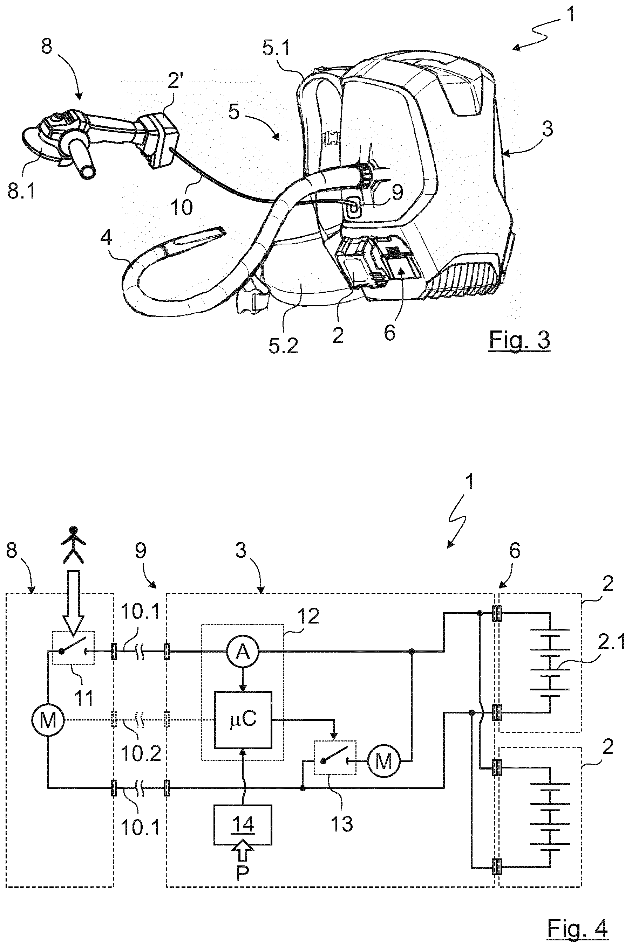

Die Akkupacks 2 sind jeweils an einer ersten Schnittstelle 6 (vgl. Figur 3 und Figur 4) zur elektrischen und mechanischen Aufnahme und Verbindung der Akkupacks 2 aufgenommen. Selbstverständlich kann eine beliebige Anzahl Akkupacks 2, beispielsweise eines, zwei, drei, vier oder mehr zur Verwendung mit der tragbaren Vorrichtung 1 vorgesehen sein. Die Akkupacks 2 können auch durch ein weiteres Gehäuseteil der tragbaren Vorrichtung 1 vor Umwelteinflüssen geschützt angeordnet oder vollständig in die tragbare Vorrichtung 1 aufgenommen sein.

Die tragbare Vorrichtung 1 weist ferner eine Benutzerschnittstelle 7 auf (vgl. Figur 2), die sich an dem Gehäuse des Reinigungsgeräts 3 befindet. Alternativ oder zusätzlich kann sich die Benutzerschnittstelle 7 auch an einer anderen Stelle, z. B. an dem Absaugschlauch 4, vorzugsweise in einem Bereich, in dem der Absaugschlauch 4 gehalten wird, befinden.

In Figur 2 ist eine grundsätzlich ähnliche Ausführung einer tragbaren Vorrichtung 1 in einer Seitenansicht dargestellt.

Merkmale, die in den Ausführungsbeispielen identisch sind und in einem vorherigen Ausführungsbeispiel bereits beschrieben wurden, werden nachfolgend nicht abermals beschrieben. Dies gilt auch für die nachfolgenden Figuren.

Figur 2 zeigt eine Ausführung, bei der der Absaugschlauch 4 des Absauggeräts 3 aus der rechten Seite des Gehäuses des Absauggeräts 3 herausgeführt wird.

Es kann auch vorgesehen sein, dass der Absaugschlauch 4 wahlweise rechtsseitig oder linksseitig des Gehäuses oder an einer beliebigen anderen Stelle aus dem Gehäuse herausgeführt wird. Der Benutzer kann dann den Absaugschlauch 4 an einer beliebigen hierfür vorgesehenen Anschlussstelle an dem Gehäuse anschließen.

Es kann auch vorgesehen sein, dass mehr als ein Absaugschlauch 4 aus dem Gehäuse herausgeführt wird.

In Figur 2 ist die Benutzerschnittstelle 7 gut erkennbar. Die Benutzerschnittstelle 7 ist am Gehäuse des Absauggeräts 3 angeordnet und umfasst außerdem eine Anzeigevorrichtung 7.1. Durch die Benutzerschnittstelle 7 kann das Absauggerät 3 beispielsweise aktiviert oder deaktiviert und in dessen Leistung geregelt werden. Die Anzeigevorrichtung 7.1 kann beispielsweise dazu verwendet werden, einen Betriebszustand und/oder einen oder mehrere Betriebsparameter P des Absauggeräts 3, beispielsweise einen Füllstand, eine Saugleistung oder ein Partikel-zu-Luft-Verhältnis des Absaugstroms, anzuzeigen.

In Figur 3 ist ein System, bestehend aus einer tragbaren Vorrichtung 1, im Wesentlichen gemäß der Ausführung der Figur 1 und eine Elektrowerkzeugmaschine 8 in der Ausführung als Schleifmaschine 8 dargestellt.

Die tragbare Vorrichtung 1 weist eine zweite Schnittstelle 9 auf, über die die Schleifmaschine 8 mit der tragbaren Vorrichtung 1 durch ein Kabel 10 verbunden ist. Die Schleifmaschine 8 kann durch keines, eines oder beide Akkupacks 2 der tragbaren Vorrichtung 1 elektrisch versorgt werden, über die Benutzerschnittstelle 7 bedienbar sein oder mit einer Steuereinheit µC (vgl. Figur 4) der tragbaren Vorrichtung 1 zum Austausch von Daten verbunden sein.

Die Elektrowerkzeugmaschine bzw. Schleifmaschine 8 kann selbst ebenfalls ein Ackupack 2' oder mehrere Akkupacks 2' aufweisen. In diesem Fall kann vorgesehen sein, dass Akkupacks 2' der Elektrowerkzeugmaschine bzw. Schleifmaschine 8 elektrisch mit den Akkupacks 2 der tragbaren Vorrichtung 1 seriell und/oder parallel verschaltet werden.

In der Ausführung gemäß Figur 3 weist die Schleifmaschine 8 einen Adapter in Form eines Akkupacks 2' auf, über den die Schleifmaschine 8 mit der zweiten Schnittstelle 9 der tragbaren Vorrichtung 1 verbunden werden kann. Durch einen solchen Adapter kann eine bestehende Elektrowerkzeugmaschine bzw. Schleifmaschine 8 mit der tragbaren Vorrichtung 1 kombiniert werden; das System weist hierdurch eine hohe Kompatibilität auf.

Alternativ kann auch ein herkömmliches Akkupack 2' an der Elektrowerkzeugmaschine bzw. der Schleifmaschine 8 vorgesehen sein, wenn die Elektrowerkzeugmaschine bzw. Schleifmaschine 8 selbst eine Schnittstelle zur Verbindung mit der zweiten Schnittstelle 9 der tragbaren Vorrichtung 1 aufweist.

Bei der kabelgebundenen Verbindung zwischen Schleifmaschine 8 und tragbarer Vorrichtung 1 kann eine automatische, beispielsweise federbasierte, Aufwickelvorrichtung für das Kabel 10 vorgesehen sein, damit das Kabel 10 stets unter einem schwachen Zug steht und den Benutzer dadurch wenig behindert. Die Aufwickelvorrichtung kann an der zweiten Schnittstelle 9 der tragbaren Vorrichtung 1 und/oder an der Elektrowerkzeugmaschine bzw. Schleifmaschine 8, beispielsweise innerhalb des Adapters in der Ausbildung als Akkupack 2', vorgesehen sein.

Eine Verbindung zwischen der Elektrowerkzeugmaschine bzw. Schleifmaschine 8 und der tragbaren Vorrichtung 1 kann auch kabellos sein. Die zweite Schnittstelle 9 kann somit eine kabellose Funkschnittstelle, beispielsweise gemäß dem Bluetooth-Standard, dem WLAN-Standard oder einem sonstigen Funkstandard, sein.

In Figur 3 ist an der tragbaren Vorrichtung 1 beispielhaft nur ein Akkupack 2 angeschlossen, obwohl die tragbare Vorrichtung 1 zur Aufnahme von zwei Akkupacks 2 vorgesehen ist. Hierdurch ist eine der ersten Schnittstellen 6 erkennbar.

Es kann von Vorteil sein, wenn die erste Schnittstelle 6 der tragbaren Vorrichtung 1 korrespondieren zu einer Schnittstelle der Elektrowerkzeugmaschine bzw. Schleifmaschine 8 zur Aufnahme und Verbindung eines Akkupacks 2' ausgebildet ist. Die Akkupacks 2, 2' können somit flexibel zwischen Elektrowerkzeugmaschine bzw. Schleifmaschine 8 und der tragbaren Vorrichtung 1 ausgetauscht werden.

Es kann vorgesehen sein, dass die Steuereinheit µC der tragbaren Vorrichtung 1 dazu eingerichtet ist, das Absauggerät 3 automatisch zu aktivieren, wenn die Schleifmaschine 8 elektrische Leistung aus dem oder den Akkupacks 2 der tragbaren Vorrichtung 1 bezieht und automatisch zu deaktivieren, wenn die Schleifmaschine 8 keine elektrische Leistung aus dem oder den Akkupacks 2 der tragbaren Vorrichtung 1 bezieht. Ein beispielhaftes Schaltungsdiagramm ist stark schematisiert in Figur 4 dargestellt.

Die Figur 4 zeigt Schaltungsdiagramme der tragbaren Vorrichtung 1, der beiden Ackupacks 2 und der Schleifmaschine 8 sowie deren elektrische Verbindung durch die Schnittstellen 6, 9.

Die Akkupacks 2 sind über jeweils eine erste Schnittstelle 6 in beispielhafter Weise parallel miteinander elektrisch verschaltet. Alternativ zu einer fest vorgegebenen Verschaltung kann auch vorgesehen sein, dass die Verschaltung flexibel von der Steuereinheit µC oder dem Benutzer vorgenommen wird. In einem Akkupack 2 kann bzw. können eine oder mehrere Akkuzellen 2.1 in Serienschaltung oder Parallelschaltung vorgesehen sein. Exemplarisch sind im Ausführungsbeispiel jeweils vier Akkuzellen 2.1 in Serienschaltung vorgesehen.

Schleifmaschine 8 und Absauggerät 3 umfassen jeweils einen Verbraucher M, bei dem es sich insbesondere um einen elektrischen Motor M handeln kann. Der elektrische Motor M in der Schleifmaschine 8 dient dabei zum Antrieb der Schleifscheibe 8.1 (vgl. Figur 3) und der elektrische Motor M in dem Absauggerät 3 zum Betrieb beispielsweise einer Turbine zur Erzeugung des Absaugstroms.

Die Schleifmaschine 8 ist über eine zweite Schnittstelle 9 mit der tragbaren Vorrichtung 1 verbunden. Im Ausführungsbeispiel ist vorgesehen, dass die Schleifmaschine 8 durch die zweite Schnittstelle 9 elektrisch von den Akkupacks 2 der tragbaren Vorrichtung 1 über Versorgungsleitungen 10.1 versorgbar ist. Durch einen mechanischen Schalter 11 kann ein Benutzer die Schleifmaschine 8 in Betrieb nehmen.

Im Ausführungsbeispiel ist vorgesehen, dass eine Messeinrichtung 12 dazu eingerichtet ist, über einen Stromfluss zu detektieren, ob die Schleifmaschine 8 elektrische Leistung aus den Akkupacks 2 bezieht. Hierfür ist ein Strommessgerät A vorgesehen, welches mit der Steuereinheit µC gekoppelt ist. Die Steuereinheit µC kann dann, insofern die Schleifmaschine 8 in Betrieb ist, das Absauggerät 3 durch einen gesteuerten Schalter 13 in Betrieb nehmen. Bei dem gesteuerten Schalter 13 kann es sich beispielsweise um eine Halbleiterschaltung, basierend auf Transistoren, insbesondere MOSFETs oder Bipolartransistoren, Thyristoren, Triacs oder um ein elektrisches Relais handeln.

Es kann alternativ auch vorgesehen sein, dass die Steuereinheit µC eingerichtet ist, das Absauggerät 3 automatisch zu aktivieren, wenn die Schleifmaschine 8 über die zweite Schnittstelle 9 ein Aktivierungssignal überträgt, und automatisch zu deaktivieren, wenn die Schleifmaschine 8 über die zweite Schnittstelle 9 ein Deaktivierungssignal überträgt. Hierfür kann eine Datenleitung 10.2, in Figur 4 gestrichelt dargestellt, vorgesehen sein. Auch eine Leistungsregelung des Absauggeräts 3 durch die Schleifmaschine 8 oder umgekehrt ist bei der Verwendung einer oder mehrerer Datenleitungen 10.2 möglich.

In Figur 4 ist ebenfalls dargestellt, dass die Steuereinheit µC einen Betriebsparameter P des Absauggeräts 3 durch eine Überwachungseinrichtung 14 überwacht. Bei den Betriebsparametern P kann es sich beispielsweise um den Füllstand des Absauggeräts 3 und/oder eine Saugleistung des Absauggeräts 3 und/oder ein Partikel-zu-Luft-Verhältnis des Absaugstroms handeln.

Die Steuereinheit µC kann dazu eingerichtet sein, einen Benutzer über den wenigstens einen Betriebsparameter P zu informieren, beispielsweise durch eine Anzeigevorrichtung 7.1 gemäß Figur 2 und/oder die Leistung des Absauggeräts 3 in Abhängigkeit des wenigstens einen Betriebsparameters P zu regeln und/oder die Leistung der Schleifmaschine 8 in Abhängigkeit des wenigstens einen Betriebsparameters P zu regeln.

## Patentansprüche

1. Tragbare Vorrichtung (1) mit wenigstens einem Akkupack (2) und einem Reinigungsgerät (3), wobei das wenigstens eine Akkupack (2) zur elektrischen Versorgung des Reinigungsgeräts (3) eingerichtet ist, ferner umfassend wenigstens eine erste Schnittstelle (6) zur elektrischen und mechanischen Aufnahme und Verbindung des wenigstens einen Akkupacks (2) sowie eine Steuereinheit (µC) und eine Benutzerschnittstelle (7), wobei eine zweite Schnittstelle (9) vorgesehen ist, über die wenigstens eine Elektrowerkzeugmaschine (8) durch das wenigstens eine Akkupack (2) elektrisch versorgbar ist und durch die Benutzerschnittstelle (7) bedienbar ist und mit der Steuereinheit (µC) zum Austausch von Daten verbunden ist,
**dadurch gekennzeichnet, dass**
wenigstens zwei erste Schnittstellen (6) zur Aufnahme von jeweils einem Akkupack (2) vorgesehen sind, die dazu ausgebildet sind, die Akkupacks (2) elektrisch seriell und/oder elektrisch parallel zu verschalten.

2. Tragbare Vorrichtung (1) nach Anspruch 1, wobei die Steuereinheit (µC) dazu eingerichtet ist, das Reinigungsgerät (3) automatisch zu aktivieren, wenn die wenigstens eine Elektrowerkzeugmaschine (8) elektrische Leistung aus dem wenigstens einen Akkupack (2) bezieht, und automatisch zu deaktivieren, wenn die wenigstens eine Elektrowerkzeugmaschine (8) keine elektrische Leistung aus dem wenigstens einen Akkupack (2) bezieht.

3. Tragbare Vorrichtung (1) nach Anspruch 2, wobei eine Messeinrichtung (M) vorgesehen ist, die dazu eingerichtet ist, über einen Stromfluss und/oder über einen Leistungsverbrauch und/oder über Spannungsschwankungen zu detektieren, ob die wenigstens eine Elektrowerkzeugmaschine (8) elektrische Leistung aus dem wenigstens einen Akkupack (2) bezieht.

4. Tragbare Vorrichtung (1) nach einem der Ansprüche 1 bis 3, wobei die Steuereinheit (µC) eingerichtet ist, das Reinigungsgerät (3) automatisch zu aktivieren, wenn die wenigstens eine Elektrowerkzeugmaschine (8) über die zweite Schnittstelle (9) ein Aktivierungssignal überträgt, und automatisch zu deaktivieren, wenn die wenigstens eine Elektrowerkzeugmaschine (8) über die zweite Schnittstelle (9) ein Deaktivierungssignal überträgt.

5. Tragbare Vorrichtung (1) nach einem der Ansprüche 1 bis 4, wobei das Reinigungsgerät (3) dazu eingerichtet ist, wahlweise von einem oder mehreren der Akkupacks (2), die mit der wenigstens einen ersten Schnittstelle (6) verbunden sind, elektrisch versorgt zu werden.

6. Tragbare Vorrichtung (1) nach einem der Ansprüche 1 bis 5, wobei die erste Schnittstelle (6) korrespondierend zu einer Schnittstelle der Elektrowerkzeugmaschine (8) zur Aufnahme und Verbindung eines Akkupacks (2') ausgebildet ist.

7. Tragbare Vorrichtung (1) nach einem der Ansprüche 1 bis 6, wobei eine Überwachungseinrichtung (14) vorgesehen ist, um wenigstens einen Betriebsparameter (P) des Reinigungsgeräts (3) zu überwachen und an die Steuereinheit (µC) ein entsprechendes Signal weiterzugeben, und wobei die Steuereinheit (µC) dazu eingerichtet ist, einen Benutzer über den wenigstens einen Betriebsparameter (P) zu informieren und/oder die Leistung des Reinigungsgeräts (3) in Abhängigkeit des wenigstens einen Betriebsparameters (P) zu regeln und/oder die Leistung der wenigstens einen Elektrowerkzeugmaschine (8) in Abhängigkeit des wenigstens einen Betriebsparameters (P) zu regeln.

8. System, aufweisend eine tragbare Vorrichtung (1) gemäß einem der Ansprüche 1 bis 7, sowie wenigstens eine Elektrowerkzeugmaschine (8).

9. System nach Anspruch 8, wobei die Elektrowerkzeugmaschine (8) von wenigstens einem Akkupack (2) der tragbaren Vorrichtung (1) elektrisch versorgbar ist und über eine zweite Schnittstelle (9) mit einer Steuereinheit (µC) der tragbaren Vorrichtung (1) verbunden ist, um ein Aktivierungssignal oder ein Deaktivierungssignal zu übertragen, wodurch ein Reinigungsgerät (3) der tragbaren Vorrichtung (1) aktivierbar oder deaktivierbar ist.

## Claims

1. Portable apparatus (1) having at least one rechargeable battery pack (2) and one cleaning device (3), wherein the at least one rechargeable battery pack (2) is designed for supplying electrical power to the cleaning device (3), further comprising at least one first interface (6) for electrically and mechanically receiving and connecting the at least one rechargeable battery pack (2) and also comprising a control unit (µC) and a user interface (7), wherein a second interface (9) is provided, by means of which at least one electric machine tool (8) can be supplied with electrical power by the at least one rechargeable battery pack (2) and can be operated by the user interface (7) and is connected to the control unit (µC) for exchanging data,
**characterized in that**
at least two first interfaces (6) are provided for receiving in each case one rechargeable battery pack (2), which two first interfaces are designed to interconnect the rechargeable battery packs (2) electrically in series and/or electrically in parallel.

2. Portable apparatus (1) according to Claim 1, wherein the control unit (µC) is designed to automatically activate the cleaning device (3) when the at least one electric machine tool (8) is drawing electrical power from the at least one rechargeable battery pack (2), and to automatically deactivate the said cleaning device when the at least one electric machine tool (8) is not drawing any electrical power from the at least one rechargeable battery pack (2).

3. Portable apparatus (1) according to Claim 2, wherein a measuring device (M) is provided, which is designed to detect whether the at least one electric machine tool (8) is drawing electrical power from the at least one rechargeable battery pack (2) by means of a current flow and/or by means of a power consumption and/or by means of voltage fluctuations.

4. Portable apparatus (1) according to one of Claims 1 to 3, wherein the control unit (µC) is designed to automatically activate the cleaning device (3) when the at least one electric machine tool (8) transmits an activation signal via the second interface (9), and to automatically deactivate the said cleaning device when the at least one electric machine tool (8) transmits a deactivation signal via the second interface (9).

5. Portable apparatus (1) according to one of Claims 1 to 4, wherein the cleaning device (3) is designed to be selectively supplied with electrical power by one or more of the rechargeable battery packs (2) which are connected to the at least one first interface (6).

6. Portable apparatus (1) according to one of Claims 1 to 5, wherein the first interface (6) is designed in a manner corresponding to an interface of the electric machine tool (8) for receiving and connecting a rechargeable battery pack (2').

7. Portable apparatus (1) according to one of Claims 1 to 6, wherein a monitoring device (14) is provided in order to monitor at least one operating parameter (P) of the cleaning device (3) and to pass on a corresponding signal to the control unit (µC), and wherein the control unit (µC) is designed to inform a user about the at least one operating parameter (P) and/or to regulate the power of the cleaning device (3) depending on the at least one operating parameter (P) and/or to regulate the power of the at least one electric machine tool (8) depending on the at least one operating parameter (P).

8. System having a portable apparatus (1) according to one of Claims 1 to 7 and also at least one electric machine tool (8).

9. System according to Claim 8, wherein the electric machine tool (8) can be supplied with electrical power by at least one rechargeable battery pack (2) of the portable apparatus (1) and is connected to a control unit (µC) of the portable apparatus (1) via a second interface (9) in order to transmit an activation signal or a deactivation signal, by way of which the cleaning device (3) of the portable apparatus (1) can be activated or deactivated.

## Revendications

1. Dispositif portatif (1) avec au moins un bloc d'accumulateurs (2) et un appareil de nettoyage (3), dans lequel ledit au moins un bloc d'accumulateurs (2) est agencé pour l'alimentation électrique de l'appareil de nettoyage (3), comprenant en outre au moins une première interface (6) pour le logement et le raccordement électriques et mécaniques dudit au moins un bloc d'accumulateurs (2), ainsi qu'une unité de commande (µC) et une interface utilisateur (7), dans lequel une seconde interface (9) est prévue, au moyen de laquelle ladite au moins une machine-outil électrique (8) peut être alimentée en électricité par ledit au moins un bloc d'accumulateurs (2) et peut être commandée par l'interface utilisateur (7), et est reliée à l'unité de commande (µC) pour l'échange de données,
**caractérisé en ce que**,
au moins deux premières interfaces (6) sont prévues pour recevoir chacune un bloc d'accumulateurs (2) conçu à cet effet, pour connecter les blocs d'accumulateurs (2) électriquement en série et/ou électriquement en parallèle.

2. Dispositif portatif (1) selon la revendication 1, dans lequel l'unité de commande (µC) est agencée pour activer automatiquement l'appareil de nettoyage (3) lorsque ladite au moins une machine-outil électrique (8) consomme de la puissance électrique dudit au moins un bloc d'accumulateurs (2), et pour le désactiver automatiquement lorsque ladite au moins une machine-outil électrique (8) ne consomme pas de puissance électrique dudit au moins un bloc d'accumulateurs (2).

3. Dispositif portatif (1) selon la revendication 2, dans lequel est prévu un dispositif de mesure (M) agencé pour détecter, au moyen d'une circulation de courant et/ou d'une consommation de puissance et/ou de variations de tension, si ladite au moins une machine-outil électrique (8) consomme de la puissance électrique dudit au moins un bloc d'accumulateurs (2).

4. Dispositif portatif (1) selon l'une des revendications 1 à 3, dans lequel l'unité de commande (µC) est agencée pour activer automatiquement l'appareil de nettoyage (3) lorsque ladite au moins une machine-outil électrique (8) transmet un signal d'activation via la seconde interface (9), et pour le désactiver automatiquement lorsque ladite au moins une machine-outil électrique (8) transmet un signal de désactivation via la seconde interface (9).

5. Dispositif portatif (1) selon l'une des revendications 1 à 4, dans lequel l'appareil de nettoyage (3) est agencé pour être alimenté en électricité au choix par un ou plusieurs des blocs d'accumulateurs (2) reliés à ladite au moins une première interface (6).

6. Dispositif portatif (1) selon l'une des revendications 1 à 5, dans lequel la première interface (6) est agencée de manière à correspondre à une interface de la machine-outil électrique (8) destinée au logement et au raccordement d'un bloc d'accumulateurs (2').

7. Dispositif portatif (1) selon l'une des revendications 1 à 6, dans lequel un dispositif de surveillance (14) est prévu, pour surveiller au moins un paramètre de fonctionnement (P) de l'appareil de nettoyage (3) et transmettre un signal correspondant à l'unité de commande (µC), et dans lequel l'unité de commande (µC) est agencée pour informer un utilisateur sur ledit au moins un paramètre de fonctionnement (P) et/ou pour régler la puissance de l'appareil de nettoyage (3) en fonction dudit au moins un paramètre de fonctionnement (P) et/ou pour régler la puissance de ladite moins une machine-outil électrique (8) en fonction dudit au moins un paramètre de fonctionnement (P).

8. Système comprenant un dispositif portatif (1) selon l'une des revendications 1 à 7, ainsi qu'au moins une machine-outil électrique (8).

9. Système selon la revendication 8, dans lequel la machine-outil électrique (8) peut être alimentée en électricité par au moins un bloc d'accumulateurs (2) du dispositif portatif (1) et est reliée par une seconde interface (9) à une unité de commande (µC) du dispositif portatif (1) pour transmettre un signal d'activation ou un signal de désactivation au moyen duquel un appareil de nettoyage (3) du dispositif portatif (1) peut être activé ou désactivé.
